# EUROPÄISCHE PATENTSCHRIFT

(11) **EP 0 954 695 B1**
(45) Veröffentlichungstag und Bekanntmachung des Hinweises auf die Patenterteilung: **21.05.2003**
(21) Anmeldenummer: 98943685.2
(22) Anmeldetag: 14.07.1998
(51) Int. Cl.: F02M 43/04

(54) **ZWEISTOFFDÜSE ZUR EINSPRITZUNG VON KRAFTSTOFF UND EINER ZUSATZFLÜSSIGKEIT**
DUAL NOZZLE FOR INJECTING FUEL AND AN ADDITIONAL FLUID
BUSE BINAIRE DESTINEE A L'INJECTION DE CARBURANT ET D'UN LIQUIDE SUPPLEMENTAIRE

(30) Priorität: 25.10.1997 DE 19747268
(43) Veröffentlichungstag der Anmeldung: 10.11.1999
(73) Patentinhaber: ROBERT BOSCH GMBH, 70442 Stuttgart (DE)
(72) Erfinder: RUOFF, Manfred, D-71696 Möglingen (DE); HARNDORF, Horst, D-71701 Schwieberdingen (DE)
(86) Internationale Anmeldenummer: DE9801960
(87) Internationale Veröffentlichungsnummer: WO99022133

(56) Entgegenhaltungen:
- DE-A- 3 928 611
- DE-A- 4 337 048
- DE-A- 19 535 703
- FR-A- 1 169 812
- PATENT ABSTRACTS OF JAPAN vol. 007, no. 133 (M-221), 10. Juni 1983 & JP 58 048771 A (TOYOTA JIDOSHA KOGYO KK), 22. März 1983
- PATENT ABSTRACTS OF JAPAN vol. 096, no. 010, 31. Oktober 1996 & JP 08 144884 A (NISSAN MOTOR CO LTD), 4. Juni 1996

## Beschreibung

### Stand der Technik

Die Erfindung geht aus von einer Zweistoffdüse für eine Brennkraftmaschine nach der Gattung des Patentanspruchs 1.

Eine derartige Zweistoffdüse ist beispielsweise aus der DE 39 28 611 A1 bekannt.

Zweistoffdüsen dienen der geschichteten Einspritzung von Kraftstoff und einer Zusatzflüssigkeit, beispielsweise Dieselkraftstoff und Wasser, in die Brennkamer einer Brennkraftmaschine um den Schadstoffausstoß der Brennkraftmaschine zu vermindern und gegebenenfalls den Wirkungsgrad zu erhöhen.

Nachteilig bei derartigen bekannten Zweistoffdüsen ist die mögliche Vermischung von Kraftstoff mit Zusatzflüssigkeit, also in der Regel von Diesel mit Wasser, die in den Bautrakten vor und nach den Einspritzdüsen möglich ist. Beispielsweise können sich beide Komponenten durch Rückfließen von Zusatzflüssigkeit über Leckagen etc. in den Kraftstofftank vermengen.

Ein weiterer Nachteil der bekannten Zweistoffdüsen besteht darin, daß die Einspritzung prinzipiell immer nur schichtweise erfolgen kann, also beispielsweise nicht Kraftstoff und Zusatzflüssigkeit parallel eingespritzt werden können.

Aus der DE 43 37 048 C2 ist auch eine Einspritzanlage mit Zweistoffdüse bekannt, die die sogenannte Common-Rail-Technik verwirklicht, bei der sämtliche die Brennkraftmaschine bedienenden Einspritzdüsen mit unter Hochdruck stehendem Kraftstoff aus einem Common-Rail-Druckspeicher beschickt werden.

Nachdem für den Einspritzvorgang mit der bekannten Zweistoffdüse das gesamte Einspritzvolumen, also grundsätzlich Kraftstoffmenge und Zusatzflüssigkeitsmenge (z.B. 1/3 der Kraftstoffmenge) mittels des hohen Common-Rail-Druckes eingespritzt werden muß und davon wieder ca. 1/3 mittels niedrigem Druck durch Zusatzflüssigkeit ersetzt wird, also die hohe Druckleistung für dieses eine Drittel vernichtet wird, ergibt sich hierbei nachteiligerweise auch eine um mindestens 1/3 höhere Kraftstoff-Pumpenleistung gegenüber der normalen Kraftstoffeinspritzung.

Weiterhin nachteilig bei der bekannten Kraftstoffeinspritzanlage ist, daß für jeden einzelnen Injektor zur Mengendosierung der Zusatzflüssigkeit ein aufwendiges und relativ teures 3/2-Wegeventil sowie für die Steuerung der Dieseleinspritzmenge ein weiteres 3/2-Wegeventil benötigt wird. Zum Vorlagern der Zusatzflüssigkeit wird dabei mit dem ersten 3/2-Wegeventil die Kraftstoffzufuhr vom Common-Rail-Druckspeicher zur Einspritzdüse unterbrochen und gleichzeitig ein die Einspritzdüse umgebender Druckraum, in dem unter Hochdruck stehender Kraftstoff gelagert ist, durch eine entsprechende Stellung des ersten 3/2-Wegeventils zur Kraftstoff-Niederdruckseite hin abgelassen. Durch den entstehenden Druckabfall im Druckraum wird über eine entsprechende Leitung Zusatzflüssigkeit in den Druckraum gefördert, die das entsprechende Kraftstoffvolumen verdrängt. Anschließend wird das erste 3/2-Wegeventil wieder in eine Stellung gebracht, die eine Verbindung zwischen dem Common-Rail-Druckspeicher und dem Druckraum im Einspritzventil herstellt. Zur mengengenauen Dosierung der einzuspritzenden Kraftstoffmenge, die der vorgelagerten Zusatzflüssigkeit bei dem durch die nächste Ventilöffnung hervorgerufenen Einspritzstoß folgen soll, ist das weitere 3/2-Wege-Magnetventil vorgesehen, welches die Rückseite der Düsennadel, die von einer Feder in Schließstellung gehalten wird, wahlweise entweder mit dem Common-Rail-Druckspeicher oder mit der Kraftstoff-Niederdruckseite verbindet und dadurch zeitlich den Hub der Ventilnadel, das Öffnen und Schließen des Ventils und damit die gewünschte Einspritzmenge steuert.

Prinzipiell benötigt die bekannte Kraftstoffeinspritzanlage für jeden einzelnen Injektor die beiden genau arbeitenden und damit aufwendigen 3/2-Steuermagnetventile um sowohl die gewünschte Kraftstoffmenge als auch die erforderliche Menge an Zusatzflüssigkeit exakt dosieren zu können.

Durch die FR 1 169 812 A ist ferner eine Zweistoffeinspritzdüse bekannt, bei der über eine innenliegende druckgesteuerte Düsennadel Wasser zur Einspritzung gebracht wird, wobei die Düsennadel in einer äusseren Düsennadel geführt ist. Die äussere Düsennadel ist wiederum im Düsenkörper geführt und wird durch zugeführten Kraftstoff gegen eine Rückstellkraft nach außen unter Durchführung einer Axialbewegung geöffnet. Diese Düse erzeugt mit der Zufuhr von Wasser innerhalb einer äusseren, Kraftstoff dosierenden Düse eine Kühlung und es wird zusätzlich mit dem eingespritzten Wasser die Zerstäubung unterstützt. Dabei ist die bekannte Düse durch zwei in gegensätzlicher Richtung öffnende Ventilglieder und die hochdruckfest zu fertigenden Führungen in diesen beiden Ventilglieder sehr aufwendig aufgebaut.

### Vorteile der Erfindung

Die erfindungsgemäße Zweistoffdüse weist zur strikten Trennung der Kraftstoffeinspritzung von der Zusatzflüssigkeitseinspritzung die kennzeichnenden Merkmale des Patentanspruchs 1 auf. Damit ist eine Vermischung von Kraftstoff mit Zusatzflüssigkeit vor dem eigentlichen Einspritzen ausgeschlossen. Die beiden Fluide können sich höchstens im Brennraum der mit der erfindungsgemäßen Zweistoffdüse ausgerüsteten Brennkraftmaschine treffen.

Vorteilhaft bei Verwendung der erfindungsgemäßen Zweistoffdüse ist weiterhin, daß zu beliebigen Zeitpunkten Zusatzflüssigkeit zum Kraftstoffeinspritzstrahl zugegeben oder zu sonstigen Kühlzwecken eingespritzt werden kann. Wenn beispielsweise in Dieselmotoren zeitparallel Wasser und Diesel eingespritzt wird, so verkürzt sich die gesamte EinspritzZeit, was bezüglich einer NOₓ-Erzeugung während der Verbrennung zu erheblich günstigeren Ergebnissen führt.

Die eigentlichen Diesel-Einspritzdüsen-Löcher können kleiner gehalten werden, was für das Verbrennungsverhalten bei Niedriglast von Vorteil ist.

Ein weiterer erheblicher Vorteil der erfindungsgemäßen Zweistoffdüse besteht darin, daß durch die Außenführung der Zusatzflüssigkeit eine Kühlung des Injektors ringsum erfolgt, was gerade in der Vollastphase, bei der große Mengen an unter Hochdruck stehendem Kraftstoff eingespritzt werden müssen, was zu einer Erhitzung des Injektors führt, eine wesentliche Verbesserung darstellt.

In den Rahmen der Erfindung fällt auch eine Kraftstoffeinspritzanlage für eine Brennkraftmaschine, die mit einer erfindungsgemäßen Zweistoffdüse ausgerüstet ist. Insbesondere, wenn die Kraftstoffeinspritzanlage von der oben beschriebenen bekannten Common-Rail-Technik für die Kraftstoffeinspritzung Gebrauch macht, können die beiden aufwendigen und teuren 3/2-Magnetsteuerventile durch ein einziges einfacheres und preiswerteres 2/2-Wegeventil in der Kraftstoffeinspritzleitung zwischen dem Common-Rail-Druckspeicher und der Kraftstoffzulaufbohrung im Düsenkörper ersetzt werden, welches die Mengendosierung für die einzuspritzende Kraftstoffmenge durch entsprechende Zeitsteuerung bewirkt.

Das oben erwähnte verlorene Leistungsdrittel beim Einspritzvorgang mit Inneneinlagerung der Zusatzflüssigkeit kann bei Anwendung der erfindungsgemäßen Zweistoffdüse aufgrund der äußeren Anlagerung der Zusatzflüssigkeit auf wenige Prozente reduziert werden, selbst wenn von der Zusatzflüssigkeitsversorgung beispielsweise 100 bar oder mehr aufgebracht werden müssen.

Besonders bevorzugt ist eine Ausführungsform der erfindungsgemäßen Zweistoffdüse, bei der der den Hohlraum zur Aufnahme von Zusatzflüssigkeit nach außen abschließende Mantel an seinem oberen Ende ringförmig dichtend mit dem Düsenkörper verschweißt ist und an seinem unteren Ende mit einem definierten Druck am Düsenkörper abhebbar anliegt und dabei ein Dichtgelenk bildet, welches gegen einen lippenförmigen Dichtsitz am Düsenkörper drückt und sich zur Einspritzung von Zusatzflüssigkeit in den Brennraum öffnen kann, sobald die Zusatzflüssigkeit im Inneren des Hohlraums einen bestimmten Differenzdruck zum Umgebungsdruck überschreitet. Die Einspritzdüsen für die Zusatzflüssigkeit können insbesondere durch Bohrungen im Dichtgelenk hinter dem Auflagebereich auf dem Dichtsitz realisiert sein.

Besonders vorteilhaft bei der erfindungsgemäßen Zweistoffdüse ist auch die Möglichkeit einer konstruktiven Variation des Einspritzwinkels β der Zusatzflüssigkeit relativ zur Längsachse des Düsenkörpers und damit auch relativ zur Einspritzrichtung des Kraftstoffs in den Brennraum. Erfindungsgemäß kann durch richtige Einstellung des Winkels β die Zweistoffdüse so betrieben werden, daß die eingespritzte Zusatzflüssigkeit im Brennraum auf gleichzeitig eingespritzten Kraftstoff auftrifft und aufgrund ihres Impulses eine Ablenkung der Kraftstoffpartikel von der Wand der Brennkammer weg bewirkt, so daß eine Auskühlung der Brennkammerwand durch auftreffenden, noch nicht entzündeten Kraftstoff verhindert wird.

Das Dichtgelenk bei der oben beschriebenen Ausführungsform der erfindungsgemäßen Zweistoffdüse soll auch nach einer sehr großen Anzahl von Einspritzvorgängen durch Anfederung und Abstützung auf der Dichtlippe des Düsenkörpers den Hohlraum mit der Zusatzflüssigkeit fluiddicht abdichten. Es ist daher vorteilhaft, den Mantel im Bereich des Dichtgelenks leicht ballig auszuführen, damit sich seine Oberfläche in diesem Gebiet in etwa abrollt. Beim Verbrennungsvorgang in der Brennkammer wird der Metallmantel vom Verbrennungsdruck auf den Injektorkörper gepreßt und dadurch der Bereich des Dichtgelenks intensiv abgedichtet. Um eine Verformung des Metallmantels nach innen zu vermeiden, können bei besonders bevorzugten Ausführungsformen der erfindungsgemäßen Zweistoffdüse an der Außenseite des Düsenkörpers in dem vom Mantel überdeckten Bereich parallel zur Längsachse des Düsenkörpers verlaufende Rippen, auf die sich der Metallmantel abstützen kann, radial vom Düsenkörper wegragen.

Weitere Vorteile und vorteilhafte Ausgestaltungen des Gegenstands der Erfindung sind der Beschreibung, der Zeichnung und den Ansprüchen zu entnehmen.

### Zeichnung

Ausführungsbeispiele der erfindungsgemäßen Zweistoffdüse sowie ihres Einsatzes in einer Kraftstoffeinspritzeinrichtung für Brennkraftmaschinen sind in der Zeichnung dargestellt und werden in der nachfolgenden Beschreibung erläutert.

Es zeigen:
- Fig. 1a: einen Längsschnitt durch eine erfindungsgemäße Zweistoffdüse mit Beschickung der Zusatzflüssigkeit durch einen Trennkolben-Adapter;
- Fig. 1b: einen Querschnitt durch die Zweistoffdüse nach Fig. 1a in der Ebene A-A;
- Fig. 2a: einen schematisierten Längsschnitt durch den unteren Abschnitt einer Ausführungsform der erfindungsgemäßen Zweistoffdüse mit einfach aufgebautem Dichtgelenk und Abstrahlungscharakteristik der Zusatzflüssigkeit ungefähr parallel zur Längsachse des Düsenkörpers;
- Fig. 2b: wie Fig. 2a, jedoch mit Düsenlöchern im Mantel und mit schräger Abstrahlcharakteristik der Zusatzflüssigkeit;
- Fig. 2c: wie Fig. 2a, jedoch mit kegelförmig am Düsenkörper anliegendem Mantel;
- Fig. 2d: wie Fig. 2c, jedoch mit Düsenbohrungen für die Zusatzflüssigkeit, Abstrahlcharakteristik schräg nach unten und Ringraum im Düsenkörper im Bereich der Düsenbohrungen;
- Fig. 3: ein weiteres Ausführungsbeispiel einer Kraftstoffeinspritzanlage mit erfindungsgemäßer Zweistoffdüse, Common-Rail-Druckspeicher für den Kraftstoff sowie zusätzlichem Common-Rail-Druckspeicher für die Zusatzflüssigkeit;
- Fig. 4a: ein drittes Ausführungsbeispiel einer Kraftstoffeinspritzanlage mit erfindungsgemäßer Zweistoffdüse und Beschickung derselben mit Zusatzflüssigkeit über einen Membran-Adapter; und
- Fig. 4b: wie Fig. 4a, jedoch mit gemeinsamer Beschickung mehrerer Injektoren mit Zusatzflüssigkeit aus einem weiteren Common-Rail-Druckspeicher.

### Beschreibung der Ausführungsbeispiele

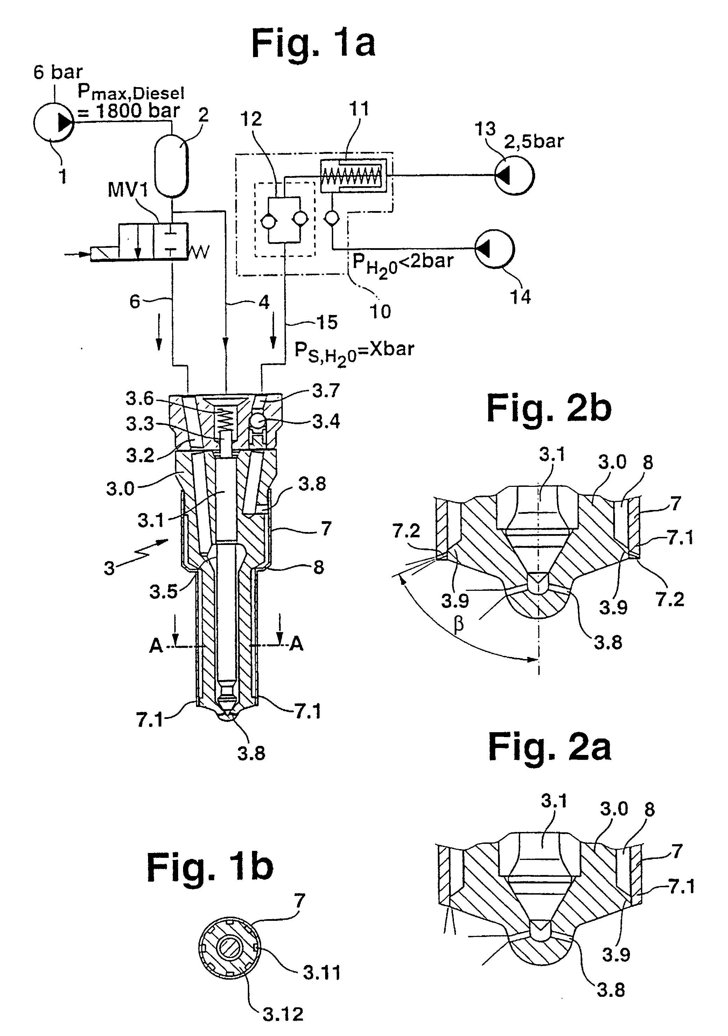

Bei dem in Fig. 1a dargestellten ersten Ausführungsbeispiel der erfindungsgemäßen Zweistoffdüse 3 in einer Kraftstoffeinspritzanlage für eine Brennkraftmaschine zur bifluiden Einspritzung von Kraftstoff (in der Regel Dieselkraftstoff) und einer Zusatzflüssigkeit (in der Regel Wasser) versorgt eine Hochdruckpumpe 1 einen Common-Rail-Druckspeicher 2 mit Kraftstoff auf einem Druckniveau von etwa 1800 bar. Zwischen dem Common-Rail-Druckspeicher 2 und einem von diesem über eine Einspritzleitung 6 und eine Zulaufbohrung 3.2 mit Kraftstoff zu versorgenden Druckraum 3.5, der die Düsennadel 3.1 der Zweistoffdüse 3 umgibt, muß nun ein mengendosierendes Bauelement angeordnet werden, da ja die früher übliche klassische Einspritzpumpe durch die Kombination aus Common-Rail-Druckspeicher 2 und der einfacheren Hochdruckpumpe 1 ersetzt wurde und der Raildruck auf einem gewissen Niveau ständig vorhanden ist. Diese Aufgabe übernimmt bei der erfindungsgemäßen Anordnung ein erstes 2/2-Wegeventil MV1. Dieses sollte als schnelles Magnetventil mit guter Reproduzierbarkeit und mehr oder weniger fließendem Übergang zwischen den beiden Extremstellungen ausgelegt sein, da eventuell ein zeitlich gestaltbarer Einspritzmengenverlauf benötigt wird. Die genaue Mengendosierung wird über den bekannten (gemessenen oder gesteuerten) Druckabfall zwischen dem Commom-Rail-Druckspeicher 2 und dem von der Zweistoffdüse 3 zu versorgenden Verbrennungsraum der Brennkraftmaschine durch ein genaues Zeitfenster, dessen Größe von anderen Einflußfaktoren abhängt, über eine elektrische Ansteuerung, die in der Zeichnung nicht dargestellt ist, ermöglicht.

Bei der erfindungsgemäßen Düsennadel 3 kann an dem der Düsennadelspitze abgewandten stumpfen axialen Ende der Düsennadel (Injektorstößel) 3.1 ein kleiner Kolben 3.3 vorgesehen sein, der mit seinem der Düsennadel 3.1 abgewandten Ende in einen Raum 3.6 ragt, welcher über eine Leitung 4 direkt mit dem Common-Rail-Druckspeicher 2 verbunden ist und mit dem dort herrschenden Hochdruck beaufschlagt wird. Dies hat zur Folge, daß zur Bewegung des Injektorstößels 3.1 stets die im wesentlichen gleiche Widerstandskraft überwunden werden muß, da nun bedingt durch die konstanten Kolbenflächenverhältnisse und das Ausschalten der Einflüsse des Absolutdrucks im Common-Rail-Druckspeicher 2 nur ein konstanter Federdruck von einem Druckimpuls aus dem (veränderlichen) Raildruck überwunden werden muß. Damit stellen sich regeltechnisch willkommenere, annähernd konstante Schaltzeiten (Bewegungszeit des Injektorstößels) ein.

Für die Einbringung von Zusatzflüssigkeit in die Zweistoffdüse 3 ist eine Zufuhrleitung 5 vorgesehen, die einenends in eine Zulaufbohrung 3.7 in der Zweistoffdüse 3 mündet. In der Zulaufbohrung 3.7 kann ein Rückschlagventil 3.4 angeordnet sein, das für den Fall des Auftretens von Undichtigkeiten im unteren Bereich des Zufuhrsystems für Zusatzflüssigkeit aus Redundanzgründen beibehalten wird, um ein Rückschlagen des Verbrennungsdrucks auf Bauteile, die mit der Zufuhrleitung 5 für Zusatzflüssigkeit verbunden sind, zu vermeiden. Durch das Rückschlagventil 3.4 bleibt außerdem die Zusatzflüssigkeit im stromabwärts liegenden Bereich höher vorgespannt, was der Einspritzdynamik förderlich ist.

An ihrem anderen Ende mündet die Zulaufbohrung 3.7 in eine umlaufende Nut 3.8 im Düsenkörper 3.0, welche einen Ringkanal bildet, der einen Zugang der Zusatzflüssigkeit zu einem oder mehreren Hohlräumen 8 ermöglicht, die zwischen der Außenseite des Düsenkörpers 3.0 und einem diese dichtend umgebenden Metallmantel 7 gebildet werden. Durch den oder die Hohlräume 8 kann die Zusatzflüssigkeit außen am Düsenkörper 3.0 entlang zu einer oder mehreren Einspritzdüsenöffnungen strömen, die im unteren Bereich der Zweistoffdüse 3 oberhalb der Düsenbohrungen 3.8 zum Einspritzen des Kraftstoffs in die Brennkammer der Brennkraftmaschine angeordnet sind.

Bei dem in Fig. 1a gezeigten Ausführungsbeispiel ist der Mantel 7 an seinem oberen Ende ringförmig dichtend mit dem Düsenkörper 3.0 verschweißt, während er an seinem unteren Ende mit definiertem Druck am Düsenkörper 3.0 abhebbar, aber dichtend anliegt und damit ein Dichtgelenk 7.1 bildet, was anhand der Figuren 2a bis 2d näher erläutert wird.

In Fig. 1b ist die Zweistoffdüse 3 von Fig. 1a im Querschnitt längs der Linie A-A dargestellt. Bei dieser Ausführungsform sind an der Außenseite des Düsenkörpers 3.0 in dem vom Mantel 7 überdeckten Bereich parallel zur Längsachse des Düsenkörpers 3.0 verlaufende Nuten 3.11 zur Strömungsführung der strömenden Zusatzflüssigkeit angebracht, die die Hohlräume 8 in diesem Ausführungsbeispiel bilden. Zwischen den Nuten 3.11 ragen Rippen 3.12 radial vom Düsenkörper 3.0 weg, auf welche sich bei Druck von außen, insbesondere durch den Verbrennungsdruck im Verbrennungsraum der Mantel 7 abstützen kann, wodurch eine Verformung nach innen vermieden wird.

Fig. 2a zeigt im Detail den Bereich um das Dichtgelenk 7.1. Dieses liegt dichtend auf einem lippenförmig ausgebildeten Dichtsitz 3.9 am Düsenkörper 3.0 oberhalb der Düsenbohrungen 3.8 an. Bei Überschreiten eines bestimmten Differenzdrucks zwischen der Zusatzflüssigkeit im Hohlraum 8 und der Umgebung im Bereich des Dichtgelenks 7.1 hebt der elastische Metallmantel 7 vom Dichtsitz 3.9 ab und gibt damit einen Strömungsquerschnitt für den Übertritt von Zusatzflüssigkeit in den Verbrennungsraum frei, der die Wirkung einer Einspritzdüse hat. Dabei wird, nachdem die von Nuten 3.11 gebildeten Hohlräume 8 direkt über den Düsenbohrungen 3.8 für die Einspritzung von Kraftstoff verlaufen, die Zusatzflüssigkeit, die sich vorzugsweise den bequemsten Weg suchen wird, einen um die Längsachse des Düsenkörpers 3.0 möglicherweise etwas aufgefächerten ringförmigen Strahl bilden, der im gezeigten Beispiel ungefähr von oben nach unten parallel zur Längsachse des Düsenkörpers 3.0 gerichtet ist.

Fig. 2b zeigt ein Ausführungsbeispiel, bei dem der Zusatzflüssigkeitsstrahl unter einem Winkel β gegen die Längsachse des Düsenkörpers 3.0 in den Brennraum eintritt. Dies läßt sich durch entsprechende Wahl der Geometrie im Bereich des Dichtgelenks 7.1, insbesondere durch schräg verlaufende Düsenbohrungen 7.2 im Metallmantel 7 erreichen. Im anliegenden Zustand des Dichtgelenks 7.1 liegen die Düsenbohrungen 7.2 auf dem Dichtsitz 3.9 des Düsenkörpers 3.0 an, so daß der Hohlraum 8 gegenüber dem Brennraum abgedichtet ist.

Durch Variation des Wassereinspritzwinkels β ergeben sich besondere Anpassungsmöglichkeiten für den Verbrennungsverlauf und die Reduzierung der Schadstoffemission der Brennkraftmaschine. Wenn die eingespritzte Zusatzflüssigkeit so gerichtet ist, daß sie den eingespritzten Kraftstoff vor Verbrennungsbeginn trifft, kann dieser durch entsprechenden Impulsübertrag beispielsweise bogenartig abgelenkt werden und damit den Verbrennungsraum besser ausfüllen und von einem Auftreffen auf die Wand des Verbrennungsraumes abgehalten werden, wodurch eine Wandabkühlung des Verbrennungsraumes vermieden wird.

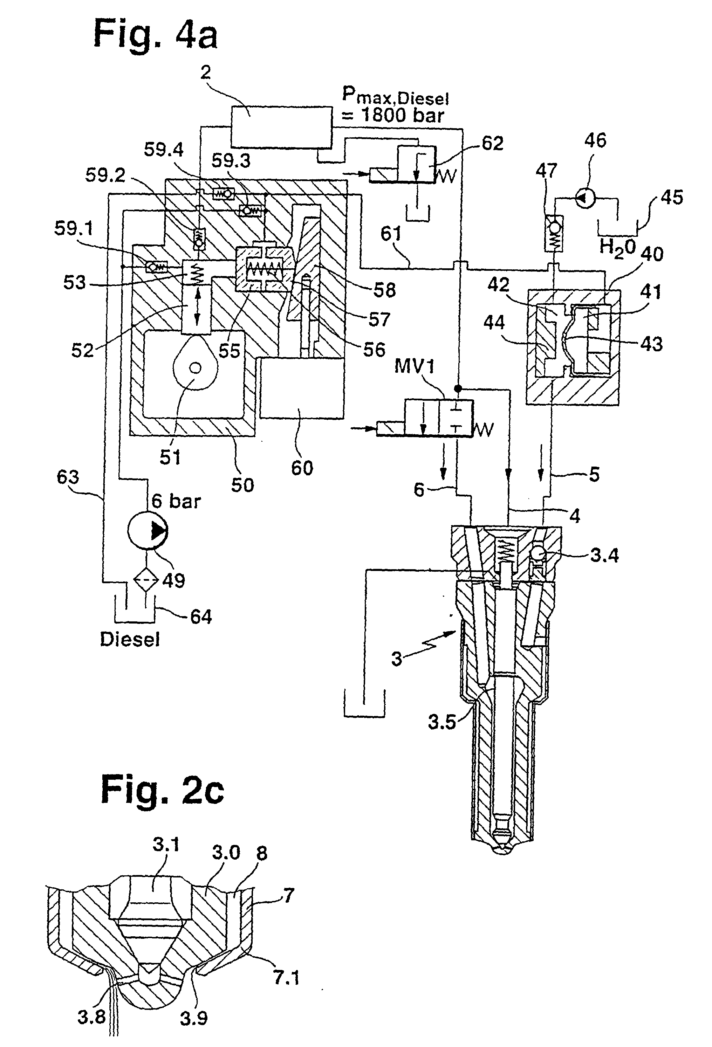

Eine weitere einfache Ausführungsform für die Gestaltung des Einspritzbereichs im Gebiet um das Dichtgelenk 7.1 ist in Fig. 2c gezeigt. Hier ist der Dichtsitz 3.9 durch eine einfache eingefräste Stufe im Düsenkörper 3.0 gebildet. Im Gegensatz zu den Ausführungsbeispielen nach Fig. 2a und Fig. 2b, wo der Mantel 7 in seinem unteren Bereich den Düsenkörper 3.0 zylinderförmig radial von der Unterseite umschließt, umgreift er ihn in der Ausführungsform nach Fig. 2c kegelförmig von unten.

Aufgrund dieser kegelartigen Ausbildung des Mantels 7 kann die Zusatzflüssigkeit bei der Einspritzung um den Düsendom des Düsenkörpers 3.0 herumstreichen und sich dadurch unmittelbar über den Kraftstoffeinspritzstrahl nach dessen Austreten aus den Düsenbohrungen 3.8 legen. Die Zugabe von Zusatzflüssigkeit kann dabei in völlig freien Zeittakten der Einspritzung von Kraftstoff überlagert, vor- oder nachgeschaltet werden. Ein erwünschter Nebeneffekt der Strahlführung der Zusatzflüssigkeit beim Ausführungsbeispiel nach Fig. 2c ist eine Kühlung des Düsendoms, was einer möglichen Verkokung der Düsenbohrungen 3.8 abhelfen oder diese zumindest hinauszögern kann.

Während der Verbrennung des Kraftstoffs im Brennraum wird wegen der kegeligen Form der Metallmantel 7 im Bereich des Dichtgelenks 7.1 aufgrund der größeren Angriffsfläche durch die Druckerzeugung des Verbrennungsvorgangs noch inniger an den Dichtsitz 3.9 des Dichtkörpers 3.0 angepreßt und dadurch ein Eindringen von heißen Verbrennungsgasen in die Hohlräume 8 verhindert.

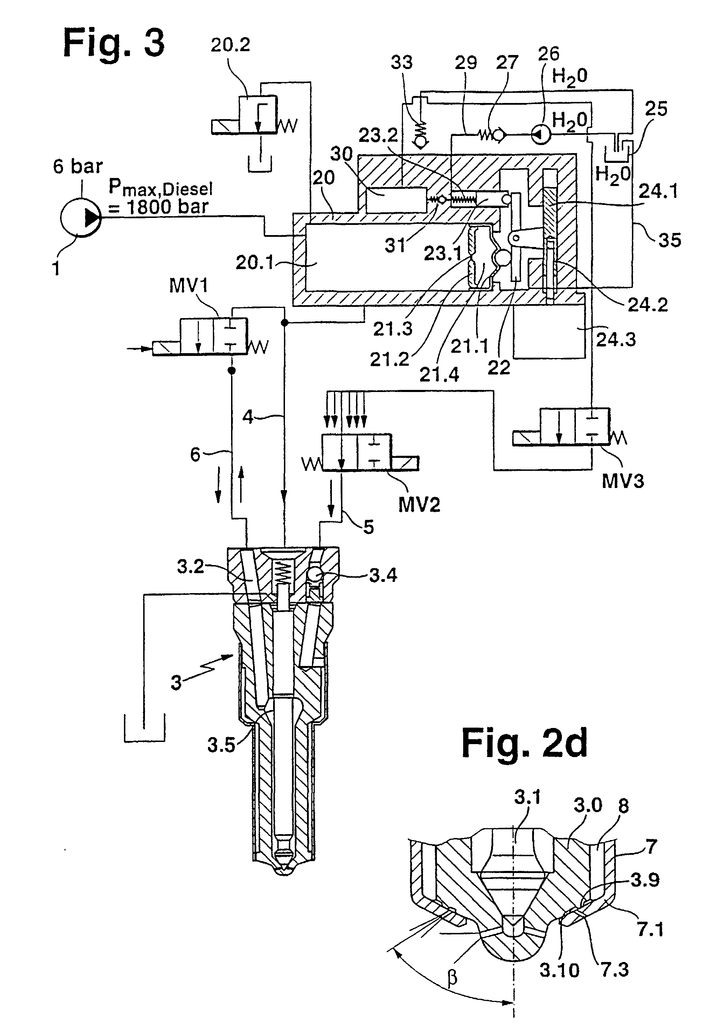

Ein weiteres Ausführungsbeispiel für die Gestaltung des Einspritzdüsenbereichs für Zusatzflüssigkeit ist in Fig. 2d gezeigt. Dort ist ebenfalls der Metallmantel 7 im Bereich des Dichtgelenks 7.1 kegelförmig ausgebildet. Auf den lippenförmigen Dichtsitz 3.9 folgt hier eine umlaufende Ringnut 3.10 im Düsenkörper 3.0, an die sich schräg verlaufende Bohrungen 7.3 im Dichtgelenk 7.1 unmittelbar anschließen. Bei Einleitung von unter Druck stehender Zusatzflüssigkeit aus den Hohlräumen 8 wird der Metallmantel 7 im Bereich des Dichtgelenks 7.1 durch Hook'sche Dehnung gelängt und längsseitig aufgebläht. Eine daraus folgende Längs- und Winkelbewegung des Metallmantelkonus im Bereich des Dichtsitzes 3.9 führt zu einer Öffnung, durch welche Zusatzflüssigkeit in den durch die umlaufende Ringnut 3.10 gebildeten Ringkanal einströmen kann und über die Bohrungen 7.3 unter einem Einspritzwinkel β in den Brennraum eingespritzt wird.

Der Metallmantel 7 wird zur Montage auf dem Düsenkörper 3.0 aufgespannt und in seinem oberen Bereich mit diesem verschweißt. Der untere Teil des Metallmantels, der bei den Ausführungsbeispielen nach Fig. 2c und 2d konisch nach innen verläuft, erhält seine endgültige Winkelform erst durch dieses Aufpressen und Verschweißen, wobei er vor dem Verschweißen möglicherweise etwas vorgespannt werden sollte. Im Anlieferungszustand besitzt der Mantel 7 zunächst einen stumpferen Konus, durch dessen Einfederung beim Aufpressen das Dichtgelenk 7.1 im Bereich des Dichtsitzes 3.9 gebildet wird. Dadurch kann Zusatzflüssigkeit aus den Hohlräumen 8 nur dann in den Verbrennungsraum gelangen, wenn das Dichtgelenk 7.1 aufgrund eines Druckstoßes der Zusatzflüssigkeit in den Hohlräumen 8 vom Dichtsitz 3.9 abhebt.

Vor dem eigentlichen Einspritzvorgang der Zusatzflüssigkeit muß die richtige Menge derselben zugemessen und bei noch niedrigem Systemdruck in die Zweistoffdüse 3 gefördert werden. Dies wird bei dem Ausführungsbeispiel nach Fig. 1a mittels einer sogenannten M-Pumpe 13 bewirkt, die eine Betriebsflüssigkeit auf einem Vordruckniveau von ungefähr 2,5 bar in einen Trennkolben-Adapter 10 mit einem Trennkolben 11 und einem Gleichdruckventil 12 fördert. Der Trennkolben-Adapter 10 separiert die Betriebsflüssigkeit (in der Regel Dieselkraftstoff) der M-Pumpe 13 von der einzubringenden Zusatzflüssigkeit (in der Regel Wasser). Dabei wird die Wasserseite eines Laufzylinders im Trennkolben 11 von einer Füllpumpe 14 über ein Rückschlagventil 16 mit Zusatzflüssigkeit auf niedrigem Druck (p < 2 bar) beschickt. Zum richtigen Zeitpunkt vor der eigentlichen Einspritzung, also zwischen den Einspritztakten, wird von der M-Pumpe 13 eine gewünschte Menge an Betriebsflüssigkeit mit einem höheren Druck als demjenigen, mit dem das Rückschlagventil 3.4 der Zweistoffdüse 3 eingestellt ist, an den Trennkolben 11 abgegeben. Dadurch wird die Menge an Zusatzflüssigkeit, die auf der anderen Seite des Trennkolbens 11 der Menge an Betriebsflüssigkeit der M-Pumpe 13 entspricht, über das Gleichdruckventil 12 an die Zufuhrleitung 5 weitergegeben. Das Gleichdruckventil 12 dient zur Druckentspannung bzw. zur richtigen Vordruckversorgung der Zufuhrleitung 5 zwischen dem Trennkolben-Adapter 11 und der Zweistoffdüse 3.

Das in Fig. 3 dargestellte weitere Ausführungsbeispiel der erfindungsgemäßen Kraftstoffeinspritzanlage unterscheidet sich von der in Fig. 1a gezeigten durch eine Modifikation des für die Förderung der Zusatzflüssigkeit verantwortlichen Teils der Anlage. Um die teure M-Pumpe 13 aus Fig. 1a durch preisgünstigere Aggregate zu ersetzen, ist nunmehr eine Pumpe für die Zusatzflüssigkeit mit dem Common-Rail-Druckspeicher 20 gekoppelt. Dazu ist eine Membran 21.1 mittels einer Massenwand 21.2 an einem Ende des Common-Rail-Druckspeichers 20 angelenkt, wobei die Massenwand 21.2 aufgrund einer leicht kegeligen Außenkontur die Membran 21.1 druckdicht in einen Hochdruckraum 20.1 des Common-Rail-Druckspeichers 20 einspannt. In der Massenwand 21.2 ist eine Blendenbohrung 21.3 vorgesehen, durch die Kraftstoff aus dem Hochdruckraum 20.1 in einen Raum 21.4, der von der Membran 21.1 und der Massenwand 21.2 umschlossen wird, je nach Druckgefällerichtung eindringen oder aus diesem austreten kann.

Ein Hebelmechanismus 22 ist einerseits mit der dem Raum 21.4 abgewandten Seite der Membran 21.1, andererseits mit einem Pumpenkolben 23.1 verbunden. Außerdem ist der Hebelmechanismus 22 auf einem längsbeweglich geführten Schieber 24.1 drehbar gelagert. Aus Druckschwankungen im Hochdruckraum 20.1 aufgrund von ruckartiger Entnahme der Einspritzmenge an Kraftstoff ergibt sich eine Bewegung der Membran 21.1. Durch den Membranweg wird eine Hin- und Herbewegung des Hebelmechanismus 22 verursacht, welche wiederum einen entsprechenden Hub des Pumpenkolbens 23.1 zur Folge hat. Der Pumpenkolben 23.1 wird über eine Druckfeder 23.2 entsprechend vorgespannt, so daß in keiner Bewegungsphase irgendwelche "Lose" entstehen können.

Während der Ansaugphase saugt der Pumpenkolben 23.1 über eine Leitung 29 mit einem Rückschlagventil 27 unterstützt durch eine Vorförderpumpe 26 eine entsprechende Menge an Zusatzflüssigkeit aus einem Tank 25. Beim Ausschieben wird die Wassermenge über die Zufuhrleitung 5 und das Rückschlagventil 3.4 in die Zweistoffdüse 3 geschoben, falls ein zweites 2/2-Wegeventil MV2 zum Dirigieren der Wassermenge durch einen Befehl eines in der Zeichnung nicht dargestellten Motor-Managements geöffnet wurde.

Um die gewünschte Menge an Zusatzflüssigkeit richtig dosieren zu können, wird der Schieber 24.1 von einem Elektromotor 24.3, welcher eine im Schieber 24.1 eingeschraubte Spindel 24.2 trägt, entsprechend einem Drehbefehl des Motor-Managements auf- oder abbewegt. Dadurch verstellt sich das Hebelverhältnis der Hebelanordnung 22, so daß unterschiedliche Hubvolumina des Pumpenkolbens 23.1 eingestellt werden können. Auf diese Weise kann die Pumpeinrichtung entweder von einem Einspritzvorgang zum anderen in den gleichen Injektor 3 unterschiedliche Mengen an Zusatzflüssigkeit zumessen oder weitere an der Zufuhrleitung 15 angeschlossene Injektoren (in der Zeichnung angedeutet durch eine Reihe paralleler Pfeile) können individuell mit der für sie jeweils richtigen Menge an Zusatzflüssigkeit beschickt werden.

Auf die Bewegungssteuerung des Schiebers 24.1 nimmt auch der Kraftstoffdruck im Hochdruckraum 20.1, der mit einem Drucksteuerventil 20.2 variierbar ist, über eine Membranwegtrift Einfluß. Um einigermaßen genaue Mengenzumessungen der einzuspritzenden Zusatzflüssigkeit vornehmen zu können, sollten entweder die Druckschwankungen im Hochdruckraum 20.1 gemessen und mit der Membrankennung durch das Motor-Management berechnet werden. Von diesem kann dann der entsprechende Drehbefehl an den Elektromotor 24.3 abgegeben werden, wobei auch eine Lageerkennung der Spindel 24.2 hilfreich ist.

Alternativ kann auch der momentane Hub des Pumpenkolbens 23.1 gemessen und mit anderen wichtigen, momentan vorliegenden Daten sowie dem aktuellen Änderungswunsch verglichen und verrechnet werden, um möglichst schnell eine Anpassung an neue Verhältnisse (beispielsweise Änderung der Gaspedalstellung durch den Fahrer eines motorbetriebenen Fahrzeugs) gewinnen zu können.

Nervöse Reaktionen der Membran 21.1, die durch Druckspitzen oder sonstige kleinere Druckschwankungen mit höheren Frequenzen im Hochdruckraum 20.1 verursacht werden und einer genauen Zumessung der erforderlichen Zusatzflüssigkeit abträglich sind, werden durch eine geeignete Dimensionierung und Abstimmung der Massenwand 21.2 mit der Blendenbohrung 21.3 und dem Federverhalten der Membran 21.1 abgedämpft. Im dynamischen Zusammenwirken der drei genannten Elemente wird sich nämlich ein Verhalten einstellen, welches einem hydraulischen Tiefpaß gleichkommt, wobei die Massenwand 21.2 im elektrischen Analog einer Induktivität, die Blendenbohrung 21.3 einem ohmschen Widerstand und die Membran 21.1 einem Kondensator entspricht. Auf diese Weise können lediglich größere niederfrequente Druckschwankungen, die sich aus entsprechenden größeren Volumenbewegungen im Hochdruckraum 20.1 ergeben, Auswirkungen auf die Membranbewegungen haben. Ein derartiger hydraulischer Tiefpaß wirkt sich außerdem vorteilhaft auf die Druckverhältnisse im Hochdruckraum 21.1 aus, da hiervon auch eine Dämpfung von Druckschwankungen stattfindet.

Die in Fig. 3 gezeigte Ausführungsform unterscheidet sich von dem Ausführungsbeispiel nach Fig. 1a außerdem dadurch, daß zur Wasserversorgung der Zweistoffdüse 3 ein weiterer Common-Rail-Druckspeicher 30 zur Aufnahme von unter Druck stehender Zusatzflüssigkeit vorgesehen ist, der über ein weiteres 2/2-Wegeventil MV3 mit der zur Zweistoffdüse 3 führenden Zufuhrleitung 5 sowie über ein Rückschlagventil 31 mit der Förderseite des membrangetriebenen Pumpenkolbens 23.1 verbunden ist.

Eine kompakte und raumsparende Gesamtanordnung ergibt sich, wenn, wie in Fig. 3 gezeigt, der weitere Common-Rail-Druckspeicher 30 für die Zusatzflüssigkeit mit dem Common-Rail-Speicher 20, der den Hochdruckraum 20.1 für den Kraftstoff umfaßt, einstückig verbunden ist.

Die Funktion der Mengenzumessung von Zusatzflüssigkeit wird bei dieser Ausführungsform unter anderem auch dadurch erleichtert, daß sie von der Funktion der Förderung von Zusatzflüssigkeit getrennt ist. Auf diese Weise kann die Mengenzumessung auch genauer erfolgen.

Zur Kosteneinsparung (höhere Stückzahlen) kann das weitere 2/2-Wegeventil MV3 baugleich mit dem ersten 2/2-Wegeventil MV1 gestaltet werden, wobei das 2/2-Wegeventil MV3 allerdings tauglich für den Betrieb mit der Zusatzflüssigkeit sein muß. Außerdem kann das weitere 2/2-Wegeventil MV3 eine ganze Gruppe von Zweistoffdüsen 3 versorgen, solange keine zeitlichen Überschneidungen der Zumeßvorgänge für die verschiedenen Injektoren vorliegen. In welchen Injektor die jeweils zugemessene Menge an Zusatzflüssigkeit abgehen soll, bestimmt wiederum ein einfach aufgebautes zweites 2/2-Wegeventil MV2, das dann allerdings für jede Zweistoffdüse der Gruppe vorhanden sein muß.

Um den steuerungstechnisch verwertbaren Druckabfall zwischen dem weiteren Common-Rail-Druckspeicher 30 mit Zusatzflüssigkeit und dem Rest der hydraulischen Widerstandskette konstant zu halten, ist der weitere Common-Rail-Druckspeicher 30 über ein Druckhalteventil 33 (p₀ = const) mit dem Vorratsbehälter 25 für Zusatzflüssigkeit verbunden. Zur Abführung einer möglichen Leckage von Zusatzflüssigkeit aus dem den Hebelmechanismus 22 einschließenden Raum ist eine Leckageleitung 35 angebracht, die in den Vorratsbehälter 25 mündet.

Das in Fig. 4a dargestellte weitere Ausführungsbeispiel der erfindungsgemäßen Kraftstoffeinspritzanlage unterscheidet sich von der in Fig. 1a gezeigten Ausführungsform einerseits durch eine Hochdruck-Pumpeneinheit 50, die außer der Beschickung des Common-Rail-Druckspeichers 2 auch noch die Volumenzumessung für Zusatzflüssigkeit übernimmt, andererseits durch eine Modifikation der Trennkolbeneinheit als Membran-Adapter 40, der nunmehr anstelle eines herkömmlichen Trennkolbens eine Membran 43 aufweist.

Die Hochdruck-Pumpeneinheit 50 wird von einer Füllpumpe 49 beschickt, die aus einem Kraftstofftank 64 Kraftstoff entnimmt und auf einem Druckniveau von ungefähr 6 bar über ein Rückschlagventil 59.1 in einen Verdichtungsraum 54 der Hochdruck-Pumpeneinheit 50 fördert. Mehrere von einer Nockenwelle 51 angetriebene, vorzugsweise in Reihe angeordnete Hochdruckkolben 52, die jeweils durch Druckfedern 53 gegen die Nocken der Nockenwelle 51 zurückgepreßt werden, bewirken während ihres Hubes jeweils eine Verdichtung des Kraftstoffs im Druckraum 54. Dadurch wird bei Überschreiten eines bestimmten Schwellendrucks ein in der Hochdruck-Pumpeneinheit 50 integriertes Auslaßventil 59.2 geöffnet und Kraftstoff auf einem Drucknieau von ungefähr 1800 bar in den Common-Rail-Druckspeicher 2 gefördert, dessen Binnendruck über ein Druckregelventil 62 konstant gehalten bzw. auf das gewünschte Niveau geregelt wird.

Um nun über eine hydraulische Leitung 61 den Membran-Adapter 40 mit einem jeweils für eine bestimmte Zweistoffdüse 3 gewünschten Volumen beschicken zu können, das als Zusatzflüssigkeitsvolumen über die Zulaüfleitung 5 abgegeben wird, ist in der Hockdruck-Pumpeneinheit 50 folgende Anordnung vorgesehen: Seitlich am Verdichtungsraum 54 außerhalb des Hubbereichs der Hochdruckkolben 52 ist ein längsbeweglicher spaltabgedichteter erster Kolben 55 angeordnet, der mittels einer Druckfeder 56 von einem zweiten .Kolben 57 auseinandergespannt ist. Der zweite Kolben 27 weist an seiner dem ersten Kolben 55 abgewandten Rückseitenfläche eine abgerundete oder angeschrägte Kuppe auf, an der ein längsverschiebbarer Bemessungskeil 58 kraftschlüssig anliegt. Durch entsprechende Verschiebung des Bemessungskeils 58 kann daher die relative axiale Lage des zweiten Kolbens 57 gegenüber dem ersten Kolben 55 variiert werden. Der Antrieb des Bemessungskeiles 58 erfolgt über eine von einem Elektromotor 60 angetriebene Spindel, die in ein geeignetes Gewinde im Bemessungskeil 58 eingreift und diesen bei Rotation des Elektromotors 60 in seiner Längsrichtung verschiebt.

Wenn einer der Hochdruckkolben 52 nun einen Verdichtungshub durchführt und den Kraftstoff im Verdichtungsraum 54 mit Druck beaufschlagt, wird der erste Kolben 55 gegen die Kraft der Druckfeder 56 in Richtung auf den rückseitig durch den Bemessungskeil 58 längsarretierten zweiten Kolben 57 verschoben. Bei entsprechender Bemessung der Federkenngrößen der Druckfeder 56 kann der erste Kolben 55 während des Hochdruckverdichtungsvorgangs durch den entsprechenden Hochdruckkolben 52 seinerseits so lange Ausschiebearbeit verrichten, bis er an den zweiten Kolben 57 anschlägt. Damit wird ein genau definiertes Kraftstoffvolumen aus dem die Druckfeder 56 enthaltenden Raum zwischen den beiden Kolben 55 und 57 über die hydraulische Leitung 61 an die Trennkolbeneinheit 40 weitergegeben. Während eines Ansaugtaktes, wenn der Verdichtungsraum 54 in seinem Volumen vergrößert wird, entfernt sich der erste Kolben 55 aufgrund der Federkraft der Druckfeder 56 wieder axial vom zweiten Kolben 57 und es kann über ein Einlaß-Rückschlagventil 59.3 Kraftstoff von der Füllpumpe 49 in den Raum zwischen den beiden Kolben 55 und 57 eingefüllt werden.

Das von der Hochdruck-Pumpeneinheit 50 über die hydraulische Leitung 61 an die Trennkolbeneinheit 40 weitergegebene Volumen an Kraftstoff gelangt in einen ersten Innenraum 41 der Trennkolbeneinheit 40, welcher mittels der druckfest eingespannten Membran 43 von einem weiteren Innenraum 42, der Zusatzflüssigkeit enthält, dichtend abgetrennt ist. Entsprechend dem jeweiligen Volumenstoß an gefördertem Kraftstoff dehnt sich die Membran 43 mit exakt gleicher Volumenverdrängung in den Innenraum 42 aus, wodurch die entsprechende Menge an Zusatzflüssigkeit über die Zulaufleitung 5 an die Zweistoffdüse 3 weitertransportiert wird.

Falls das geodätische Gefälle zur Förderung der Zusatzflüssigkeit nicht ausreicht, wird die letztere mittels einer Füllpumpe 46 aus einem Zusatzflüssigkeitsbehälter 45 über ein Rückschlagventil 47 in den Innenraum 42 der Trennkolbeneinheit 40 gefördert.

Da der Druck für die Einspritzung von Zusatzflüssigkeit wesentlich niedriger (ca. 20...30 bar oder während der Verbrennung < 200 bar) als der niedrigste Druck im Common-Rail-Druckspeicher 2 (ca. 500 bar) ist, wird eine Bewegbarkeit des ersten Kolbens 55 für die indirekte Zumessung von Zusatzflüssigkeit während der Verdichtungsphase der Hochdruckkolben 52 gut möglich sein. Die für die Mengenzumessung an Zusatzflüssigkeit bestimmte Menge an Kraftstoff wird, wie schon oben beschrieben, ziemlich genau durch die Stellung und den dadurch gebotenen Anschlag der Kolben 55 und 57, des Bemessungskeils 58, der wiederum von der Gewindespindel des Elektromotors 60 verstellt werden kann, vorgegeben. Der Elektromotor 60 erhält seinen Stell-Befehl von einem in der Zeichnung nicht dargestellten Motormanagement.

Wenn man eine bestimmte, vorläufig unveränderte Stellposition des Bemessungskeils 58 voraussetzt und den ersten Kolben 55 seine Ausstoßarbeit und seine Ansaugvorgänge verrichten läßt, so ist im Zusammenwirken mit der zurückfedernden Membrane 43 der Trennkolbeneinheit 40 in den Räumen "Membran-Dieselseite", "Leitung 61" und im "Verdichtungsraum der Kolben 55 und 57" so etwas wie ein abgeschlossenes hydraulisches System vorhanden, d.h. es wird immer nur Kraftstoff hin- und hergeschoben. Zuschub von der Füllpumpe 49 erhält das System nur, wenn z.B. durch Kolbenleckage der Kolben 55 und 57 Ansaugdefekte entstehen würden. Wenn nun der Bemessungskeil 58 nach unten gezogen wird, also in Richtung größerer Volumenstöße, so ist ebenfalls ein Ansaugdefekt vorhanden. Der erste Kolben 55 erhält von der Füllpumpe 49 die fehlende Menge. Die gewollte Folge ist, daß natürlich die Membran 43 pro Hub weiter ausgelenkt wird als vorher.

Im "abgeschlossenen hydraulischen System" ist nun aber mehr Volumen vorhanden als in der vorhergehenden Stellung des Bemessungskeils 58. Wenn nun weiterhin der Bemessungskeil 58 im Rahmen der übergeordneten Leistungsanpassung wieder erheblich zurückgestellt wird, so ist jetzt evtl. soviel Volumen im System vorhanden, daß die Membran 43 in ihre "Nullstellung" nicht mehr zurückkehrt, wohl aber ihre Sollhübe, die nun kleiner sind, noch absolviert. Es ist also eine Membrandrift vorhanden. Diese kann, wenn lebhaft verstellt wird, was oftmals der Fall sein wird, soweit gehen, daß eine Überlastung der Membran 43 droht. Um dies zu vermeiden, soll in derartigen Fällen die Membran 43 an einen Anschlag 44 im Innenraum 42 anstoßen.

Es wird sich kurz ein Überdruck im System aufbauen, dessen verursachendes Volumen über ein Überdruck-Rückschlagventil 59.4, das vorzugsweise in der Hochdruck-Pumpeneinheit 50 integriert ist, sowie über eine Entlastungsleitung 63 an den Kraftstofftank 64 abgesteuert wird. Es kommt nur einmal kurz zu einer Fehlsteuerung der Menge an Zusatzflüssigkeit (evtl. nur etwas zu wenig eingespritzt, - kein Totalausfall!), was kaum eine dramatische Folge für die Vermeidung von Schadstoffen während der vielen anderen wohlgeregelten Verbrennungsvorgänge haben wird.

Falls eine Einspritzung von Zusatzflüssigkeit nicht benötigt wird, kann im übrigen mittels Elektromotor 60, bzw. damit bewegtem Bemessungskeil 58, die Zusatzflüssigkeitsmenge auf Null herabgefahren werden. Die Kolben 55 und 57 werden dabei einfach mehr oder weniger zusammengepreßt, so daß der erste Kolben 55 keinen Arbeitshub mehr vollbringen kann.

Um eine einwandfreie ungestörte Bedienung von mehreren Zweistoffdüsen 3 mit der entsprechenden Zusatzflüssigkeitsmenge zu gewährleisten, wäre es auf den ersten Blick nötig, für jeden Injektor 3 einen Hochdruckkolben 53 mit daranhängenden Kolben 55 und 57, sowie je eine Trennkolbeneinheit 40 zu installieren.

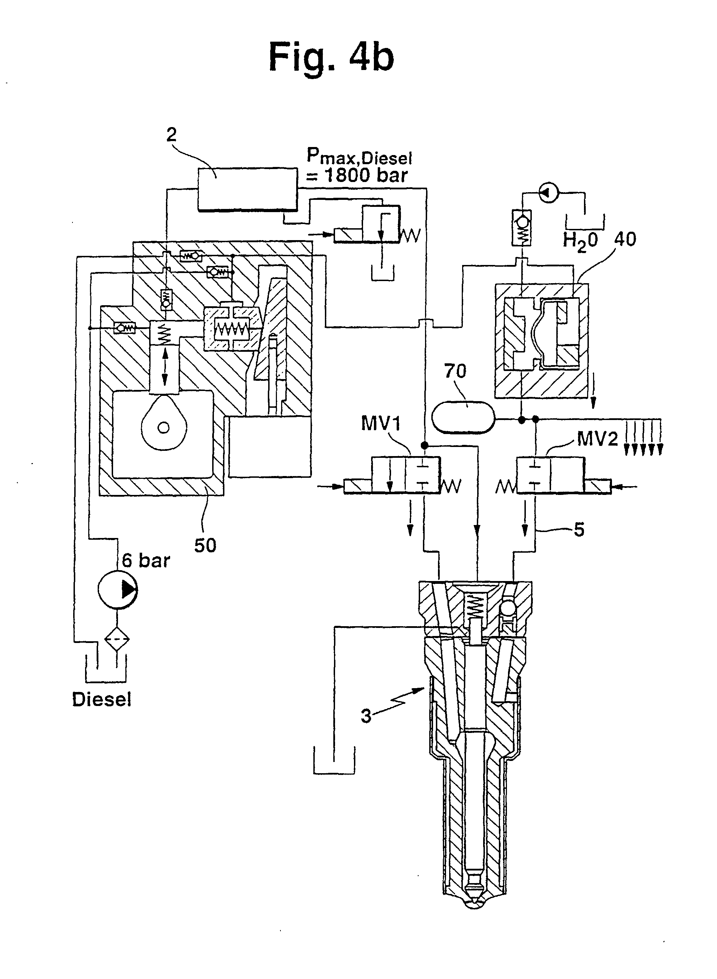

Dies wäre jedoch für übliche Nutzfahrzeug-Dieselmotoren mit vielen Arbeitszylindern sehr kostenaufwendig und erforderte überdies erhebliches Bauvolumen. Man kann derartige Kosten und Bauvolumina reduzieren, indem man durch einige wenige Versorgungstrakte für Zusatzflüssigkeit ganze Gruppen von Injektoren oder alle Injektoren versorgen läßt. In Fig. 4b ist eine Vielzahl parallel geschalteter Injektoren durch parallele Pfeile angedeutet.

Wenn man eine derartige Aufteilung vornimmt, muß man darauf achten, daß kein Umpumpen der Kolben 55 stattfindet. D.h. es darf nicht sein, daß ein Kolben 55 gerade ansaugt, während ein anderer Kolben 55 Kraftstoff-Menge an die Trennkolbeneinheit 40 sendet. Diese Voraussetzung ist bezüglich dem zeitlichen Ablauf der Arbeitstakte zu organisieren. Aus diesen Überlegungen wird sich in der Planung die mögliche Reduzierung, bzw. unbedingt nötige Anzahl der Hochdruckkolben 52 und deren konstruktiver Anhang für die Wassermengenversorgung ergeben, falls wegen Druck-Pulsation im Common-Rail-Druckspeicher etc. nicht sonstige Argumente im Wege stehen.

In ähnlicher Weise kann man Kosten reduzieren, wenn man eine Bemessungskeil-Elektromotor-Anordnung wiederum Gruppen von Kolben 55 und 57 bedienen läßt.

Da der Mengenausschub von Kraftstoff für die Mengenzumessung an Zusatzflüssigkeit während der Hochverdichtungsphase der Hochdruckkolben 52 vor sich geht und nicht zu einem möglicherweise unterschiedlichen richtigen Einspritz-Zeitpunkt für Zusatzflüssigkeit, muß zum entsprechenden Zeitpunkt ein zweites 2/2-Wegeventil MV2 des richtigen Injektors 3 zur Einspritzung von Zusatzflüssigkeit beschaltet werden. Falls wie bei der in Fig. 4a gezeigten relativ einfachen Anlage für die indirekte Zumessung von Zusatzflüssigkeit ein eigenes Schaltglied zur Injektoransteuerung fehlt, muß mittels einer möglichst exakten Einstellung des Hochdruckpumpen-Nokkendrehwinkels der genaue Einspritzzeitpunkt für Zusatzflüssigkeit mit dem Einspritzzeitpunkt für Kraftstoff bei Volllast abgestimmt werden.

Ein weiterer Unterschied des Ausführungsbeispiels nach Fig. 4b gegenüber dem nach Fig. 4a besteht darin, daß ein weiterer Common-Rail-Druckspeicher 70 vorgesehen ist, in den über die Trennkolbeneinheit 40 eine bestimmte Menge an Zusatzflüssigkeit eingespeichert und zu einem beliebigen Zeitpunkt durch entsprechendes Aufschalten des 2/2-Wegeventils MV2 zur Einspritzung in die Zweistoffdüse 3 gelangen kann.

## Patentansprüche

1. Zweistoffdüse (3) zur Einspritzung von Kraftstoff, vorzugsweise Dieselkraftstoff, sowie einer Zusatzflüssigkeit, vorzugsweise Wasser, in eine Brennkammer einer Brennkraftmaschine, mit einem Düsenkörper (3.0), der mindestens eine Zulaufbohrung (3.2) für die Zufuhr von unter Hochdruck stehendem Kraftstoff in die Zweistoffdüse (3) mit einer Düsennadel (3.1) sowie mit Düsenbohrungen (3.8) zum Einspritzen des Kraftstoffes aus der Zweistoffdüse in die Brennkammer aufweist, und mit einem Mantel (7), vorzugsweise aus Metall, der mindestens einen an dem Düsenkörpers (3.0) angrenzenden verlaufenden Hohlraum (8) zu Aufnahme von Zusatzflüssigkeit umschließt und mit einer Zuführleitung (5) für die Zufuhr von unter Druck stehender Zusatzflüssigkeit in den Hohlraum (8), **dadurch gekennzeichnet, dass** der Mantel um die Außenseite des Düsenkörpers (3.0) herum angrenzt und dort den Hohlraum (8) bildet und dass wenigstens eine Einspritzdüse zum Einspritzen der Zusatzflüssigkeit aus dem Hohlraum (8) in die Brennkammer vorgesehen ist.

2. Zweistoffdüse nach Anspruch 1, **dadurch gekennzeichnet, daß** der Mantel (7) an seinem oberen Ende ringförmig dichtend mit dem Düsenkörper (3.0) verbunden, vorzugsweise verschweißt ist, und an seinem unteren Ende mit definiertem Druck am Düsenkörper (3.0) abhebbar anliegt.

3. Zweistoffdüse nach Anspruch 2, **dadurch gekennzeichnet, daß** am Düsenkörper (3.0) im Bereich oberhalb der Düsenbohrungen (3.8) ein, vorzugsweise lippenförmiger, Dichtsitz (3.9) ausgebildet ist, an dem der Mantel (7) mit seinem unteren Ende dichtend anliegt und ein Dichtgelenk (7.1) bildet, das bei Überschreiten eines bestimmten Differenzdrucks zwischen der Zusatzflüssigkeit im Hohlraum (8) und der Umgebung im Bereich des Dichtgelenks (7.1) vom Dichtsitz (3.9) abhebt und damit den Strömungsquerschnitt von einer oder mehreren Einspritzdüsen zum Einspritzen von Zusatzflüssigkeit in die Brennkammer freigibt.

4. Zweistoffdüse nach Anspruch 3, **dadurch gekennzeichnet, daß** die Einspritzdüsen zum Einspritzen von Zusatzflüssigkeit durch Bohrungen (7.2; 7.3) gebildet sind, die in Strömungsrichtung der Zusatzflüssigkeit gesehen hinter dem Auflagebereich des Dichtgelenks (7.1) auf dem Dichtsitz (3.9) im Dichtgelenk (7.1) angebracht sind.

5. Zweistoffdüse nach Anspruch 4, **dadurch gekennzeichnet, daß** im Bereich der Bohrungen (7.3) eine umlaufende Ringnut (3.10) im Düsenkörper (3.0) vorgesehen ist.

6. Zweistoffdüse nach einem der Ansprüche 2 bis 5, **dadurch gekennzeichnet, daß** der Winkel β zwischen der Längsachse des Düsenkörpers (3.0) und der Strömungsrichtung der in den Brennraum eingespritzten Zusatzflüssigkeit durch entsprechende Wahl der Geometrie des Mantels (7) an seinem unteren, abhebbaren Ende sowie des Düsenkörpers (3.0) im unteren Anlagebereich des Mantels (7), vorzugsweise durch Wahl der Relativposition zwischen den Bohrungen (7.2; 7.3) zum Einspritzen des Kraftstoffs und den Einspritzdüsen (3.8) zum Einspritzen von Zusatzflüssigkeit, konstruktiv variierbar ist.

7. Zweistoffdüse nach einem der Ansprüche 1 bis 6, **dadurch gekennzeichnet, daß** der Mantel (7) an seinem unteren Ende kegelförmig den Düsenkörper (3.0) von unten umgreift.

8. Zweistoffdüse nach einem der Ansprüche 1 bis 6, **dadurch gekennzeichnet, daß** der Mantel (7) an seinem unteren Ende den Düsenkörper (3.0) zylinderförmig radial von der Seite umschließt.

9. Zweistoffdüse nach einem der Ansprüche 2 bis 8, **dadurch gekennzeichnet, daß** der Mantel (7) an seinem unteren Ende im Bereich der Anlage am Düsenkörper (3.0) leicht ballig ist.

10. Zweistoffdüse nach einem der vorhergehenden Ansprüche, **dadurch gekennzeichnet, daß** an der Außenseite des Düsenkörpers (3.0) in dem vom Mantel (7) überdeckten Bereich parallel zur Längsachse des Düsenkörpers (3.0) verlaufende Nuten (3.11) angebracht sind.

11. Zweistoffdüse nach einem der vorhergehenden Ansprüche, **dadurch gekennzeichnet, daß** an der Außenseite des Düsenkörpers (3.0) in dem vom Mantel (7) überdeckten Bereich parallel zur Längsachse des Düsenkörpers (3.0) verlaufende Rippen (3.12) radial vom Düsenkörper wegragen.

12. Zweistoffdüse nach einem der vorhergehenden Ansprüche, **dadurch gekennzeichnet, daß** in dem den Düsenbohrungen (3.8) axial gegenüberliegenden Bereich des Düsenkörpers (3.0) eine Zulaufbohrung (3.7) für Zusatzflüssigkeit vorgesehen ist, in die einenends die Zufuhrleitung (5) für die Zufuhr von Zusatzflüssigkeit einmündet.

13. Zweistoffdüse nach Anspruch 12, **dadurch gekennzeichnet, daß** die Zulaufbohrung (3.7) für Zusatzflüssigkeit anderenends in einen durch eine umlaufende Nut (3.8) im Düsenkörper (3.0) gebildeten Ringkanal mündet, welcher die Zulaufbohrung (3.7) für Zusatzflüssigkeit mit dem bzw. den Hohlräumen (8) verbindet.

14. Zweistoffdüse nach einem der Ansprüche 12 oder 13, **dadurch gekennzeichnet, daß** in der Zulaufbohrung (3.7) für Zusatzflüssigkeit ein Rückschlagventil (3.4) vorgesehen ist.

15. Kraftstoffeinspritzanlage für eine Brennkraftmaschine mit einer Zweistoffdüse (3) nach einem der vorhergehenden Ansprüche, **dadurch gekennzeichnet, daß** ein mit unter Hochdruck stehendem Kraftstoff gefüllter Common-Rail-Druckspeicher (2; 20) über eine Einspritzleitung (6), die von einem 2/2-Wegeventil (MV1) geöffnet bzw. geschlossen werden kann, mit der Zulaufbohrung (3.2) für Kraftstoff im Düsenkörper (3.0) der Zweistoffdüse (3) verbunden ist.

16. Kraftstoffeinspritzanlage nach Anspruch 15, **dadurch gekennzeichnet, daß** die Zufuhrleitung (5) für Zusatzflüssigkeit an ihrem der Zweistoffdüse (3) abgewandten Ende mit einem Trennkolben-Adapter (10) verbunden ist, der einen Trennkolben (11), welcher einerseits mit Betriebsflüssigkeit von einer M-Pumpe (13), andererseits mit Zusatzflüssigkeit von einer Füllpumpe (14) beschickt wird, und ein dem Trennkolben (11) nachgeschaltetes Gleichdruckventil (12) umfaßt.

17. Kraftstoffeinspritzanlage nach Anspruch 15, **dadurch gekennzeichnet, daß** die Zufuhrleitung (5) für Zusatzflüssigkeit an ihrem der Zweistoffdüse (3) abgewandten Ende über mindestens ein zweites 2/2-Wegeventil (MV2) mit einem weiteren Common-Rail-Druckspeicher (30; 70) zur Aufnahme von unter Druck stehender Zusatzflüssigkeit verbunden ist.

18. Kraftstoffeinspritzanlage nach Anspruch 15 oder 17, **dadurch gekennzeichnet, daß** die Zufuhrleitung (5) für Zusatzflüssigkeit an ihrem der Zweistoffdüse (3) abgewandten Ende mit einem ersten Innenraum (42) eines Membran-Adapters (40) verbunden ist, der eine Membran (43) aufweist, die den ersten Innenraum (42) dichtend von einem zweiten Innenraum (41) abtrennt, wobei der zweite Innenraum (41) mit unter Hochdruck stehender Betriebsflüssigkeit, vorzugsweise Kraftstoff abgemessener Menge, und der erste Innenraum (42) mit Zusatzflüssigkeit beschickt werden kann.

19. Verfahren zum Betrieb einer Zweistoffdüse (3) nach Anspruch 6, und ggf. einer Kraftstoffeinspritzanlage nach einem der Ansprüche 15 bis 18, **dadurch gekennzeichnet, daß** der Winkel β zwischen der Längsachse des Düsenkörpers (3.0) und der Strömungsrichtung der in den Brennraum eingespritzten Zusatzflüssigkeit so eingestellt wird, daß die eingespritzte Zusatzflüssigkeit im Brennraum auf den gleichzeitig eingespritzten Kraftstoff auftrifft und durch ihren Impuls eine Ablenkung zumindest eines Teiles der Kraftstoffpartikel von der Wand der Brennkammer weg bewirkt.

## Claims

1. Dual-substance nozzle (3) for the injection of fuel, preferably diesel fuel, and of an additional liquid, preferably water, into a combustion chamber of an internal combustion engine, with a nozzle body (3.0) which has at least one inflow bore (3.2) for the supply of fuel which is under high pressure into the dual-substance nozzle (3), with a nozzle needle (3.1) and with nozzle bores (3.8) for injecting the fuel out of the dual-substance nozzle into the combustion chamber, and with a casing (7), preferably consisting of metal, which surrounds at least one running cavity (8), contiguous to the nozzle body (3.0), for the reception of additional liquid, and with a supply line (5) for the supply of additional liquid which is under pressure into the cavity (8), **characterized in that** the casing is contiguous around the outside of the nozzle body (3.0) and forms the cavity (8) there, and **in that** at least one injection nozzle for injecting the additional liquid out of the cavity (8) into the combustion chamber is provided.

2. Dual-substance nozzle according to Claim 1, **characterized in that** the casing (7) is connected, preferably welded, at its upper end to the nozzle body (3.0) in an annularly sealing manner and at its lower end comes to bear with defined pressure on the nozzle body (3.0) so as to be capable of being lifted off.

3. Dual-substance nozzle according to Claim 2, **characterized in that** the nozzle body (3.0) has formed on it, in the region above the nozzle bores (3.8), a preferably lip-shaped sealing seat (3.9), on which the casing (7) comes to bear sealingly with its lower end and forms a sealing joint (7.1) which lifts off from the sealing seat (3.9) when a defined differential pressure between the additional liquid in the cavity (8) and the surroundings in the region of the sealing joint (7.1) is exceeded and which consequently opens the flow cross section of one or more injection nozzles for the injection of additional liquid into the combustion chamber.

4. Dual-substance nozzle according to Claim 3, **characterized in that** the injection nozzles for the injection of additional liquid are formed by bores (7.2; 7.3) which, as seen in the direction of the flow of the additional liquid, are formed in the sealing joint (7.1), downstream of the bearing region of the sealing joint (7.1) on the sealing seat (3.9).

5. Dual-substance nozzle according to Claim 4, **characterized in that** a peripheral annular groove (3.10) in the nozzle body (3.0) is provided in the region of the bores (7.3).

6. Dual-substance nozzle according to one of Claims 2 to 5, **characterized in that** the angle β between the longitudinal axis of the nozzle body (3.0) and the direction of flow of the additional liquid injected into the combustion space can be varied structurally by an appropriate choice of the geometry of the casing (7) at its lower end capable of being lifted off and of the nozzle body (3.0) in the lower bearing region of the casing (7), preferably by a choice of the relative position between the bores (7.2; 7.3) for injecting the fuel and the injection nozzles (3.8) for the injection of additional liquid.

7. Dual-substance nozzle according to one of Claims 1 to 6, **characterized in that** the casing (7) at its lower end surrounds the nozzle body (3.0) conically from below.

8. Dual-substance nozzle according to one of Claims 1 to 6, **characterized in that** the casing (7) at its lower end surrounds the nozzle body (3.0) cylindrically radially from the side.

9. Dual-substance nozzle according to one of Claims 2 to 8, **characterized in that** the casing (7) is slightly convex at its lower end in the region of bearing contact on the nozzle body (3.0).

10. Dual-substance nozzle according to one of the preceding claims, **characterized in that** grooves (3.11) running parallel to the longitudinal axis of the nozzle body (3.0) are formed on the outside of the nozzle body (3.0) in the region covered by the casing (7).

11. Dual-substance nozzle according to one of the preceding claims, **characterized in that** ribs (3.12) running parallel to the longitudinal axis of the nozzle body (3.0) project radially away from the nozzle body (3.0) on the outside of the nozzle body (3.0) in the region covered by the casing (7).

12. Dual-substance nozzle according to one of the preceding claims, **characterized in that** an inflow bore (3.7) for additional liquid, into which the supply line (5) for the supply of additional liquid issues at one end, is provided **in that** region of the nozzle body (3.0) which is located axially opposite the nozzle bores (3.8).

13. Dual-substance nozzle according to Claim 12, **characterized in that** the inflow bore (3.7) for additional liquid issues at the other end into an annular duct which is formed by a peripheral groove (3.8) in the nozzle body (3.0) and which connects the inflow bore (3.7) for additional liquid to the cavity or cavities (8).

14. Dual-substance nozzle according to one of Claims 12 or 13, **characterized in that** a non-return valve (3.4) is provided in the inflow bore (3.7) for additional liquid.

15. Fuel injection system for an internal combustion engine with a dual substance nozzle (3) according to one of the preceding claims, **characterized in that** a common-rail pressure accumulator (2; 20) filled with fuel which is under high pressure is connected to the inflow bore (3.2) for fuel in the nozzle body (3.0) of the dual-substance nozzle (3) via an injection line (6) which can be opened or closed by a 2/2-way valve (MV1).

16. Fuel injection system according to Claim 15, **characterized in that** the supply line (5) for additional liquid is connected, at its end facing away from the dual-substance nozzle (3), to a separating-piston adapter (10) which comprises a separating piston (11), which is fed, on the one hand, with operating liquid by a motor-driven pump (13) and, on the other hand, with additional liquid by a filling pump (14), and a constant-pressure valve (12) located downstream of the separating piston (11).

17. Fuel injection system according to Claim 15, **characterized in that** the supply line (5) for additional liquid is connected at its end facing away from the dual-substance nozzle (3), via at least one second 2/2-way valve (MV2), to a further common-rail pressure accumulator (30; 70) for the reception of additional liquid which is under pressure.

18. Fuel injection system according to claim 15 or 17, **characterized in that** the supply line (5) for additional liquid is connected, at its end facing away from the dual-substance nozzle (3), to a first inner space (42) of a diaphragm adapter (40) having a diaphragm (43) which separates the first inner space (42) sealingly from a second inner space (41), the second inner space (41) being capable of being fed with operating liquid, preferably fuel, of metered quantity, which is under high pressure, and the first inner space (42) being capable of being fed with additional liquid.

19. Method for operating a dual-substance nozzle (3) according to Claim 6 and, if appropriate, a fuel injection system according to one of Claims 15 to 18, **characterized in that** the angle β between the longitudinal axis of the nozzle body (3.0) and the direction of flow of the additional liquid injected into the combustion space is set in such a way that, in the combustion space, the injected additional liquid impinges on to the simultaneously injected fuel and, by its pulse, causes a deflection of at least some of the fuel particles away from the wall of the combustion chamber.

## Revendications

1. Buse binaire (3) pour injecter du carburant, notamment du gasoil, ainsi qu'un fluide complémentaire, notamment de l'eau dans une chambre de combustion d'un moteur à combustion interne, comprenant :
- un corps de buse (3.0) muni d'au moins un perçage d'alimentation (3.2) pour l'alimentation en carburant à haute pression de la buse binaire (3), une aiguille de buse (3.1) ainsi que des perçages d'éjection (3.8) pour injecter le carburant avec la buse binaire dans la chambre de combustion, et
- une enveloppe (7), notamment en métal, prévue au niveau d'au moins une cavité (8) adjacente au corps de buse (3.0) pour recevoir du liquide auxiliaire et une conduite d'alimentation (5) pour fournir le liquide auxiliaire en pression à la cavité (8),
**caractérisée en ce que**
l'enveloppe est adjacente au côté extérieur du corps de buse (3.0) et y forme une cavité (8) et
au moins une buse d'injection est prévue pour injecter le liquide auxiliaire de la cavité (8) dans la chambre de combustion.

2. Buse binaire selon la revendication 1,
**caractérisée en ce que**
l'enveloppe (7) est reliée, au niveau de son extrémité supérieure annulaire, de manière étanche au corps de buse (3.0), de préférence par soudage et à son extrémité inférieure elle s'applique de façon mobile avec une pression définie contre le corps de buse (3.0).

3. Buse binaire selon la revendication 2,
**caractérisée en ce que**
sur le corps de buse (3.0), dans la zone au-dessus des perçages d'éjection (3.8), on a un siège d'étanchéité (3.9), de préférence en forme de lèvres, contre lequel l'extrémité inférieure de l'enveloppe (7) s'appuie de manière étanche et forme un joint articulé (7.1) qui en cas de dépassement d'une certaine différence de pression entre le liquide auxiliaire dans la cavité (8) et l'environnement au niveau du joint articulé (7.1) se soulève du siège d'étanchéité (3.9) et libère ainsi la section de passage d'un ou plusieurs orifices d'éjection pour injecter du liquide auxiliaire dans la chambre de combustion.

4. Buse binaire selon la revendication 3,
**caractérisée en ce que**
les buses d'éjection servant à injecter du liquide auxiliaire sont formées par des perçages (7.2 ; 7.3) situés en aval de la zone d'appui du joint articulé (7.1) contre le siège d'étanchéité (3.9) du joint articulé (7.1) selon le sens d'écoulement du liquide auxiliaire.

5. Buse binaire selon la revendication 4,
**caractérisée par**
une rainure périphérique (3.10) dans le corps de buse (3.0) au niveau des perçages (7.3).

6. Buse binaire selon l'une des revendications 2 à 5,
**caractérisée en ce que**
l'angle β, entre l'axe longitudinal du corps de buse (3.0) et la direction d'écoulement du liquide auxiliaire injecté dans la chambre d'écoulement, peut être modifié par construction par le choix approprié de la géométrie de l'enveloppe (7) au niveau de son extrémité inférieure relevable ainsi que du corps de buse (3.0) dans la zone d'appui inférieur de l'enveloppe (7), de préférence par le choix de la position relative entre les perçages (7.2, 7.3) pour injecter le carburant et les orifices d'éjection (3.8) pour injecter du liquide auxiliaire.

7. Buse binaire selon l'une des revendications 1 à 6,
**caractérisée en ce que**
l'enveloppe (7) entoure par en bas le corps de buse (3.0) par son extrémité inférieure conique.

8. Buse binaire selon l'une des revendications 1 à 6,
**caractérisée en ce qu'**
à son extrémité inférieure l'enveloppe (7) entoure le corps de buse (3.0) suivant une forme cylindrique, radialement par le côté.

9. Buse binaire selon l'une des revendications 2 à 8,
**caractérisée en ce que**
l'enveloppe (7) est légèrement bombée à son extrémité inférieure au niveau de l'appui contre le corps de buse (3.0).

10. Buse binaire selon l'une des revendications précédentes,
**caractérisée en ce que**
des rainures (3.11) sont réalisées parallèlement à l'axe longitudinal du corps de buse (3.0), dans le côté extérieur du corps de buse (3.0) dans la zone couverte par l'enveloppe (7).

11. Buse binaire selon l'une des revendications précédentes,
**caractérisée en ce que**
le côté extérieur du corps de buse (3.0) comporte radialement en saillie par rapport au corps de buse des nervures (3.12) parallèles à l'axe longitudinal du corps de buse (3.0), dans sa zone couverte par l'enveloppe (7).

12. Buse binaire selon l'une des revendications précédentes,
**caractérisée en ce que**
dans la zone du corps de buse (3.0), axialement à l'opposé des perçages d'éjection (3.8), il est prévu un perçage d'alimentation (3.7) pour le liquide auxiliaire, perçage dans lequel débouche une extrémité de la conduite d'alimentation (5) en liquide auxiliaire.

13. Buse binaire selon la revendication 12,
**caractérisée en ce que**
le perçage d'alimentation (3.7) du liquide auxiliaire débouche par son autre extrémité dans un canal annulaire formé par une rainure périphérique (3.8) du corps de buse (3.0), ce canal reliant le perçage d'alimentation (3.7) en liquide auxiliaire avec la ou les cavités (8).

14. Buse binaire selon l'une des revendications 12 ou 13,
**caractérisée par**
un clapet anti-retour (3.4) dans le perçage d'alimentation (3.7) du liquide auxiliaire.

15. Installation d'injection de carburant pour un moteur à combustion interne comportant une buse binaire (3) selon l'une des revendications précédentes,
**caractérisée en ce qu'**
un accumulateur de pression à rampe commune (2.20) rempli de carburant à haute pression, est relié par une conduite d'injection (6) ouverte ou fermée par un distributeur à 2/2 voles (MV1) au perçage d'alimentation (3.2) du carburant dans le corps de buse (3.0) de la buse binaire (3).

16. Installation d'injection de carburant selon la revendication 15,
**caractérisée en ce que**
la conduite d'alimentation (5) du liquide auxiliaire est reliée à son extrémité opposée à celle de la buse binaire (5) à un adaptateur de piston séparateur (10) qui comprend un piston séparateur (11) sollicité d'un côté par le liquide de fonctionnement d'une pompe M (13) et de l'autre par du liquide auxiliaire venant d'une pompe de remplissage (14), et une soupape d'équilibrage de pression (12) en aval du piston séparateur (11).

17. Installation d'injection de carburant selon la revendication 15,
**caractérisée en ce que**
la conduite d'alimentation (5) en liquide auxiliaire est reliée à son extrémité opposée à la buse binaire (3), par au moins un second distributeur à tiroir à 2/2 voies (MV2), à un autre accumulateur de pression à rampe commune (30 ; 70) pour recevoir du liquide auxiliaire mis en pression.

18. Installation d'injection de carburant selon la revendication 15 ou 17,
**caractérisée en ce que**
la conduite d'alimentation (5) de liquide auxiliaire est reliée par son extrémité opposée à celle de la buse binaire (3), à une première chambre (42) d'un adaptateur à membrane (40) ayant une membrane (43) séparant la première chambre (42) de manière étanche d'une seconde chambre (41), la seconde chambre (41) recevant du liquide de fonctionnement à haute pression, de préférence du carburant en quantité dosée et la première chambre (42) recevant du liquide auxiliaire.

19. Procédé de mise en oeuvre d'une buse binaire (3) selon la revendication 6 et le cas échéant d'une installation d'injection de carburant selon l'une des revendications 15 à 18,
**caractérisé en ce que**
l'angle β, entre l'axe longitudinal du corps de buse (3.0) et la direction d'écoulement du liquide auxiliaire injecté dans la chambre de combustion, est réglé pour que le liquide auxiliaire injecté dans la chambre de combustion rencontre le carburant injecté en même temps et pour que son impulsion dévie au moins une partie des particules de carburant de la paroi de la chambre de combustion.
